(19) Europäisches Patentamt / European Patent Office / Office européen des brevets

(11) **EP 2 201 403 B1**

## (12) EUROPEAN PATENT SPECIFICATION

(45) Date of publication and mention
of the grant of the patent:
**07.11.2012 Bulletin 2012/45**

(21) Application number: **08806251.8**

(22) Date of filing: **12.09.2008**

(51) Int Cl.:
*G01S 13/32* (2006.01)          *G01S 13/93* (2006.01)
*G01S 7/35* (2006.01)

(86) International application number:
**PCT/GB2008/003093**

(87) International publication number:
**WO 2009/034335 (19.03.2009 Gazette 2009/12)**

(54) **Determination of time shift of a band-pass signal**

Bestimmung der Zeitverschiebung eines Bandpasssignals

Détermination du décalage d'un signal passe-bande

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **12.09.2007 GB 0717791**

(43) Date of publication of application:
**30.06.2010 Bulletin 2010/26**

(73) Proprietors:
• **Mitsubishi Electric Information Technology
Centre
Europe B.V.
Guildford
Surrey GU2 7YD (GB)**
Designated Contracting States:
**GB**
• **Mitsubishi Electric Corporation
Chiyoda-ku
Tokyo 100-8310 (JP)**
Designated Contracting States:
**AT BE BG CH CY CZ DE DK EE ES FI FR GR HR
HU IE IS IT LI LT LU LV MC MT NL NO PL PT RO
SE SI SK TR**

(72) Inventor: **SZAJNOWSKI, Wieslaw, Jerzy
Guildford, Surrey GU1 2AR (GB)**

(74) Representative: **Brinck, David John Borchardt et al
R.G.C. Jenkins & Co
26 Caxton Street
London SW1H 0RJ (GB)**

(56) References cited:
**EP-A- 1 777 547      DE-C1- 3 607 913
US-A- 3 337 870**

**Description**

**Field of the invention**

This invention relates to a method and apparatus for determining a time shift between a band-pass signal and its time-shifted replica by utilizing a compacted version of a cross-correlation function. The method is particularly, but not exclusively, applicable to time-delay determination in systems performing the tasks of object detection and ranging.

**Background of the invention**

Many measuring systems utilize signals of a specific form of a *band-pass signal*, i.e. a signal whose frequency spectrum substantially vanishes outside a certain frequency band, determined by two specified frequencies: a lower frequency $f_L$ and an upper frequency $f_H$. A band-pass signal may be classified as narrow-band, wideband or ultra-wideband, depending on the value of its fractional bandwidth, defined as a ratio of the signal bandwidth, $(f_H - f_L)$, to its mid-band (or centre) frequency $f_C = (f_H + f_L)/2$. While a *narrowband* signal has a small (say, one percent) fractional bandwidth, an *ultra-wideband* signal is characterized by the fractional bandwidth exceeding the value of 0.25. When band-pass signals are neither narrowband nor ultra-wideband, they are usually referred to as *wideband* signals.

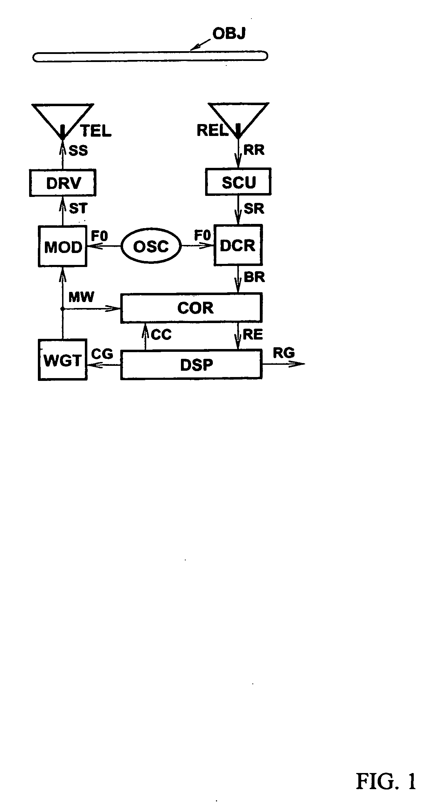

One important application exploiting band-pass signals is that of obstacle detection and ranging with an automotive microwave sensor. Fig. 1 is a simplified block diagram of microwave automotive radar.

A suitable waveform MW, supplied by a waveform generator WGT, is used to modulate, in a modulator MOD, a carrier wave F0 generated by a microwave oscillator OSC. The output signal ST of the modulator MOD is amplified in an amplifier/driver DRV, and then, in a suitably modified form SS, applied to a transmitting element TEL. As a result, a microwave interrogating signal is sent towards an obstacle OBJ. The transmitted signal may be continuous, or it may have the form of a pulse train with, or without, additional intrapulse modulation.

A signal reflected from an obstacle OBJ is captured by a receiving element REL, and then in a modified form RR amplified and suitably shaped in a signal conditioning unit SCU. The output signal SR of the unit SCU is converted to baseband in a downconverter DCR, also driven by the carrier F0 generated by the oscillator OSC.

A baseband version BR of a received signal is processed jointly with the modulating waveform MW in a suitable correlator COR. As well known to those skilled in the art, the cross-correlation function RE between the signals BR and MW can be used to determine the time delay between the transmitted and reflected microwave signals, hence the distance to the obstacle.

More specifically, the time delay is determined from the position in time of the peak of the obtained cross-correlation function RE. When a reflected signal retains the form of a transmitted signal, the cross-correlation function has the same shape as the autocorrelation function of the signal. As well known to those skilled in the art, the width of the correlation peak will become narrower when an interrogating signal occupies a wider bandwidth. Therefore, in order to improve the accuracy of time-delay determination, wideband signals are employed.

An analysis of the shape of the cross-correlation function between the transmitted and reflected band-pass signals, such as signals ST and SR in Fig. 1, shows that the shape is of the form of a microwave pulse at the carrier frequency, and the envelope of this pulse replicates the cross-correlation function determined at baseband.

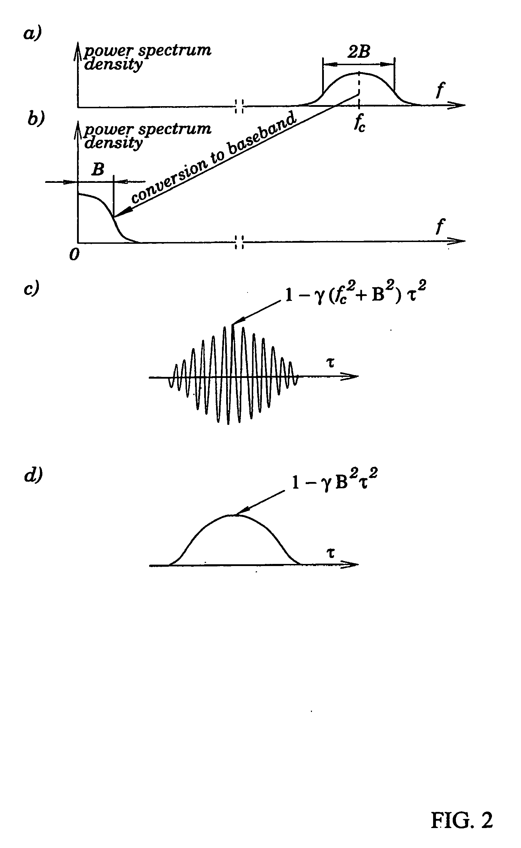

Fig. 2 a illustrates the power spectral density of a transmitted band-pass signal; its spectrum occupies the bandwidth 2B at carrier frequency $f_C$. The spectrum of this signal converted to baseband is shown in Fig. 2 b. Correlation functions of the band-pass signal and its baseband version are shown, respectively, in Fig. 2c and Fig. 2d. The number of the cycles of the carrier frequency $f_C$, observed within the correlation envelope is proportional to the ratio $f_C/B$.

A detailed analysis of the shapes of the correlation functions of a band-pass signal and its baseband version is presented in: S. Sugasawa: Time Difference Measurement of Ultrasonic Pulses Using Cross-Correlation Function between Analytic Signals. Jpn. J. Appl. Phys. Vol. 41 (2002) pp. 3299-3307.

The analysis demonstrates that the peak of the baseband correlation function can be approximated by a parabola $(1 - \gamma B^2\tau^2)$, whereas the peak of the band-pass correlation function can be approximated by another parabola $[1 - \gamma(f_C^2 + B^2) \tau^2]$, where $\gamma$ is a constant. As seen, the band-pass correlation will always exhibit a much sharper peak than will the baseband correlation function. In fact, for a large value of the ratio $f_C/B$, the contribution of the signal bandwidth B to the peak sharpness is negligible, and the peak is mainly determined by the value of carrier frequency $f_C$. It would therefore be of interest to exploit somehow this potentially useful property. However, any attempt to apply directly a band-pass correlation function to a task of time-delay determination will fail for two main reasons:

- when there are many cycles of the carrier within the correlation envelope, it is virtually impossible to find the one with the greatest value

- when the number of carrier cycles is relatively small, and then individual cycles are distinct, the unknown phase of the carrier introduces an unknown offset between the maximum of the envelope (indicating a correct delay) and that of the carrier; this phenomenon makes time-delay determination very inaccurate

Of course, in case one, the phase of the carrier is also unknown but this would not matter much because of the high 'density' of carrier peaks.

It would therefore be desirable to provide a method and an apparatus for determining a time shift between a band-pass signal and its time-shifted replica by fully exploiting the characteristic structure of a band-pass correlation function.

## Summary of the Invention

Aspects of the invention are set out in the accompanying claims.

## Brief description of the drawings

Various embodiments of the invention will now be discussed with reference to the accompanying drawings, in which:

Fig. 1 is a simplified block diagram of microwave automotive radar;
Fig. 2A depicts the power spectral density of a band-pass signal;
Fig. 2B depicts the power spectral density of a baseband signal obtained from a band-pass signal as a result of downconversion;
Fig. 2C shows the autocorrelation function of a band-pass signal;
Fig. 2D shows the autocorrelation function of a baseband signal obtained from a band-pass signal as a result of downconversion;
Fig. 3 illustratess schematically the concept of using a band-pass signal at carrier frequency $f_c$ to produce a baseband version and additionally K frequency-shifted replicas positioned at intermediate frequencies $f_k$;
Fig. 4 shows examples of in-phase and quadrature cross-correlation functions obtained at baseband (k = 0) and at nine different intermediate frequencies;
Fig. 5 depicts the shape the periodic comb function $D_K(\tau)$ obtained for nine different intermediate frequencies, when all weights $a_k$ are equal;
Fig. 6 shows the shape the periodic comb function $D_K(\tau)$ obtained for nine different intermediate frequencies, when the weights $a_k$ have been constructed in accordance with the invention;
Fig. 7 depicts two components, $R_R(\tau)$ and $R_K(\tau)$, and the magnitude $|R_C(\tau)|$ of the compacted cross-correlation function $R_C(\tau)$ for six arbitrarily selected values of the phase angle $\theta$;
Fig. 8 depicts the cross-correlation envelope $R_E(\tau)$ and the magnitude $|R_C(\tau)|$ of the compacted cross-correlation function $R_C(\tau)$ obtained for equal weights;
Fig. 9 depicts the shape of Pascal window for K = 9 and three values of the control parameter p: 0.05, 0.2 and 0.4;
Fig. 10 shows the magnitudes $|R_C(\tau)|$ of the compacted cross-correlation function $R_C(\tau)$ obtained for different Pascal windows;
Fig. 11 depicts a cross-correlation envelope $R_E(\tau)$ and its two compacted versions obtained for a Pascal window with the control parameter p = 0.05 and p = 0.4;
Fig. 12 shows all the cross-correlation functions of Fig. 11 after squaring;
Fig. 13 is a functional block diagram of a correlation compacting system CCR constructed in accordance with the invention; and
Fig. 14 is a modified block diagram of microwave automotive radar incorporating a correlation compacting system CCR constructed in accordance with the invention.

## Description of the invention

Suppose that a band-pass signal s(t) with a carrier (or centre) frequency $f_C$ is delayed by an unknown amount $\Delta$ to produce a time-delayed replica s(t-$\Delta$). The signal s(t) may be a radio-frequency (RF) or a microwave band-pass signal transmitted towards some obstacle of interest, and the signal s(t-$\Delta$) may be viewed as being reflected back by the obstacle. As well known, the distance to the obstacle can be determined from the delay $\Delta$ experienced by the transmitted signal.

For example, the transmitted signal s(t) may have a form of a sinusoidal carrier of frequency $f_C$ suitably modulated in amplitude and/or frequency by a modulating waveform. It is well known to those skilled in the art that imparting such modulation on the carrier will result in spreading the carrier's power. The power, *concentrated* initially at frequency $f_C$,

will now be distributed within a frequency band $B_0$, *centred* at frequency $f_C$. Consequently, the modulation process will transform the primary co-sinusoidal autocorrelation function, $\cos 2\pi f_c \tau$, of a coherent carrier into another co-sinusoidal function $R(\tau)\cos 2\pi f_c \tau$, but with its envelope $R(\tau)$ decaying in time. The shape of the envelope $R(\tau)$ will depend on the shape of the power spectral distribution, and the time width and extent of the envelope will decrease with increasing frequency band $B_0$.

Assume that an original transmitted signal s(t) and its delayed replica s(t-Δ) are both available for further processing to determine the value of unknown delay Δ. In accordance with another aspect of the invention, the delayed signal s(t-Δ) is downconverted to baseband and a plurality of K predetermined intermediate frequencies $f_1, f_2, ... , f_k, ... , f_K$. As a result, the following (K+1) representations of the signal s(t-Δ) are obtained:

$$s_0(t-\Delta), \ s_1(t-\Delta), \ ... \ , \ s_k(t-\Delta), \ ... \ , \ s_K(t-\Delta).$$

The transmitted signal s(t) is also downconverted to baseband and to the same K intermediate frequencies $f_1$, $f_2, ... , f_k, ..., f_K$; however, in this case, two quadrature components of the signal s(t) are produced. Therefore, downconversion of the transmitted signal results in 2(K+1) its representations:

$$[x_0(t), \ y_0(t)], \ [x_1(t), \ y_1(t)], \ ... \ , \ [x_k(t), \ y_k(t)], \ ... \ , \ [x_K(t), \ y_K(t)]$$

where $x_k(t)$ and $y_k(t)$ are, respectively, the so-called *in-phase* and *quadrature* components obtained at intermediate frequency $f_k$ (obviously, $x_0(t)$ and $y_0(t)$ are the baseband components). Alternately, the 2(K+1) representations of the signal s(t) may be regarded as (K+1) complex representations. Many different techniques are known to produce quadrature components of a signal at a suitably chosen intermediate frequency.

It is convenient, although not necessary, to utilize intermediate frequencies that are successive harmonics of some suitably chosen fundamental frequency $f_1$, i.e.

$$f_k = k\,f_1, \quad k = 1, 2, ... , K$$

In accordance with a further aspect of the invention, a bank of 2(K+1) correlators is utilized, at baseband and the K intermediate frequencies, to determine cross-correlation functions between each of the complex (K+1) representations of the primary signal s(t) and the corresponding representations of the delayed signal s(t-Δ).

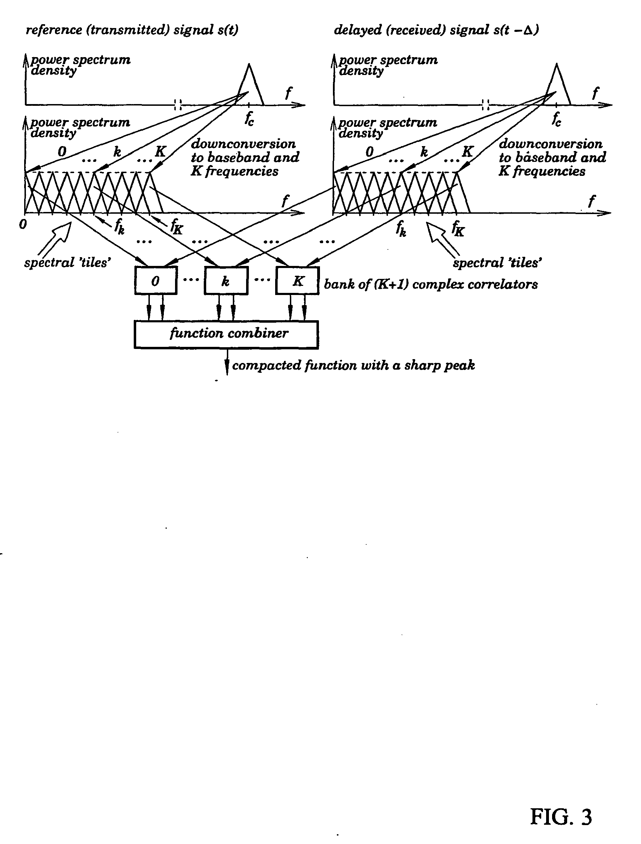

Fig. 3 depicts schematically the disclosed concept of using a band-pass signal s(t) at carrier frequency $f_C$ to produce its baseband version and additionally K frequency-shifted replicas positioned at intermediate frequencies $f_k$. Such an operation may be viewed as a conversion of a band-pass signal occupying a finite frequency band centred at carrier frequency $f_C$ into a notional <u>baseband 'signal'</u> with its bandwidth extended to (approximately) the greatest of the used intermediate frequencies, i.e. $f_K$. Therefore, it will be advantageous to use this approach in order to expand the bandwidth of a band-pass signal for the purpose of time-delay determination. It is to be noted that the primary transmitted signal s(t) does not contain itself any useful information whatsoever, and its characteristics are so selected as to obtain efficient power transmission, and also to facilitate the time-delay determination.

Fig. 3 also illustrates a similar bandwidth expansion experienced by a delayed signal s(t-Δ). A specific 'tile' structure of the resulting spectra of the two signals, s(t) and s(t-Δ), can be exploited to cross-correlate the signals components represented by the corresponding 'tiles' (spectral replicas). Then, the obtained cross-correlation functions can be suitably combined to obtain a 'compacted' function with a pronounced sharp peak to facilitate time-delay determination.

As a result of the operations of downconversion and cross-correlation performed jointly, the following set of cross-correlation functions will be obtained:

- at baseband:

$$C_0(\tau) = R_E(\tau - \Delta)\cos\theta, \quad S_0(\tau) = R_E(\tau - \Delta)\sin\theta$$

- and, at each of the K intermediate frequencies $f_k$, k = 1, 2, ... , K:

$$C_k(\tau) = R_E(\tau - \Delta)\cos(2\pi f_k \tau - \theta), \quad S_k(\tau) = R_E(\tau - \Delta)\sin(2\pi f_k \tau - \theta)$$

In the above expressions, $\theta$ is an unknown phase angle resulting from the phase delay at the centre frequency $f_C$, and also from the phase of reflection of the transmitted signal s(t) by an object of interest.

The function $R_E(\tau-\Delta)$ is the envelope of all the above cross-correlation functions: $C_k(\tau)$, $S_k(\tau)$, k = 0, 1, ... , K; this envelope can be determined from two baseband cross-correlation functions as follows:

$$R_E(\tau - \Delta) = \sqrt{C^2_0(\tau) + S^2_0(\tau)}$$

The location in time of the peak of $R_E(\tau-\Delta)$ corresponds to the so-called group delay $\Delta$ of the signal s(t) and is conventionally used for time-delay determination.

In the following, it will be convenient to refer to the cross-correlation functions $C_k(\tau)$, k = 0, 1, ... , K, comprising a co-sinusoidal term as *in-phase cross-correlation functions*; similarly, the cross-correlation functions $S_k(\tau)$ comprising a sinusoidal term will be referred to as *quadrature cross-correlation functions*.

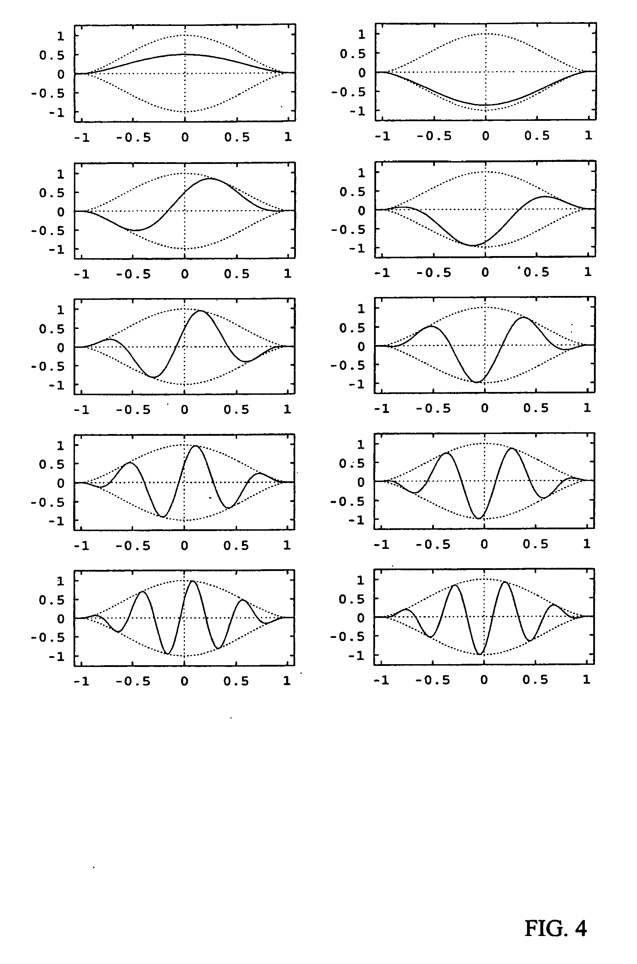

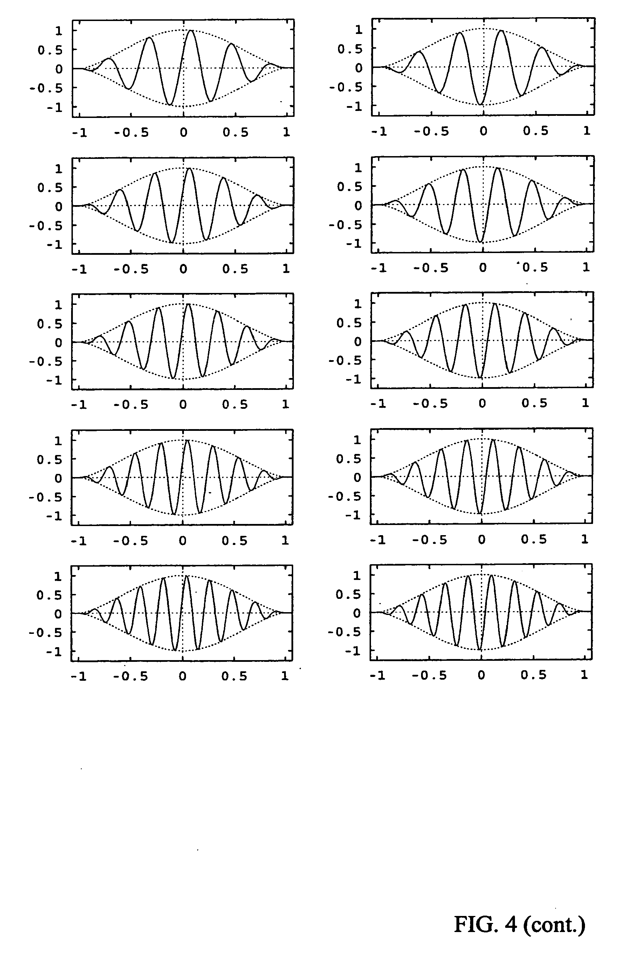

For illustrative purposes and to facilitate the understanding of the invention, Fig. 4 depicts examples of in-phase and quadrature cross-correlation functions obtained at baseband (k = 0) and at nine different intermediate frequencies $kf_1$, k = 1, 2, ..., 9; the value of the unknown phase angle $\theta$ is set to $\pi/3$. In this case, the delay $\Delta$ is set to zero, and the relative time $\tau$ has been normalized in such a way that the envelope $R_E(\tau)$ spans the time interval (-1,1); the period of the fundamental frequency $f_1$ is equal to 2. As seen, at any intermediate frequency $f_k$, the positions of the maximum of the respective cross-correlation function $C_k(i)$, $S_k(\tau)$, and that of its envelope $R_E(\tau)$ do not coincide. This is due to the existence of an unobservable and generally unknown phase angle $\theta$.

In accordance with a further aspect of the invention, all in-phase cross-correlation functions $C_k(\tau)$ are averaged with suitable weights $a_k$ to produce a real component $R_R(\tau)$ of a *compacted* cross-correlation function $R_C(\tau)$

$$R_R(\tau) = \sum_{k=0}^{K} a_k C_k(\tau)$$

where the weights $a_k$ are normalized in such a way that their sum is equal to unity, hence:

$$\sum_{k=0}^{K} a_k = 1$$

The optimal choice of weights $a_k$ will be discussed in more detail below.

Similarly, all quadrature cross-correlation functions $S_k(\tau)$ are averaged with the same predetermined weights $a_k$ to produce an imaginary component $R_I(\tau)$ of the compacted cross-correlation function $R_C(\tau)$

$$R_I(\tau) = \sum_{k=0}^{K} a_k S_k(\tau)$$

The compacted cross-correlation function $R_c(\tau)$, constructed in accordance with the invention, is a complex function comprising the components $R_R(\tau)$ and $R_I(\tau)$, hence:

$$R_C(\tau) = R_R(\tau) + jR_I(\tau)$$

Accordingly, the magnitude $|R_C(\tau)|$ of the compacted cross-correlation function $R_C(\tau)$ can be determined from:

$$|R_C(\tau)| = \sqrt{R^2_R(\tau) + R^2_I(\tau)}$$

It is easy to show that the magnitude $|R_C(\tau)|$ has the form:

$$
\begin{aligned}
|R_C(\tau)| &= R_E(\tau) \left| \sum_{k=0}^{K} a_k \exp(j2\pi f_k \tau - \theta) \right| \\
&= R_E(\tau) |\exp(-j\theta)| \left| \sum_{k=0}^{K} a_k \exp(j2\pi f_k \tau) \right| \\
&= R_E(\tau) \left| \sum_{k=0}^{K} a_k \exp(j2\pi f_k \tau) \right|
\end{aligned}
$$

The above expression can be interpreted as follows. The observed magnitude $|R_C(\tau)|$ of the compacted cross-correlation function $R_C(\tau)$ is the result of time 'gating' of the periodic comb function $D_K(\tau)$

$$D_K(\tau) = \left| \sum_{k=0}^{K} a_k \exp(j2\pi f_k \tau) \right|$$

by the cross-correlation envelope $R_E(\tau)$.

Therefore, the peak of the magnitude $|R_C(\tau)|$ of the compacted cross-correlation function $R_C(\tau)$ will coincide with the peak of the cross-correlation envelope $R_E(\tau)$, and can be used to determine the unknown delay $\Delta$. Because the peak of the compacted cross-correlation function $|R_C(\tau)|$ can be made significantly narrower than that of the cross-correlation envelope $R_E(\tau)$, the accuracy of time-delay determination will be improved in comparison with the conventional techniques of time-delay determination.

Furthermore, the obtained magnitude $|R_C(\tau)|$ of the compacted cross-correlation function $R_C(\tau)$ does not depend on the unknown phase angle $\theta$. Therefore, the changes of phase $\theta$, e.g., due to minute variations of the transmission path, Doppler effect or frequency fluctuations, will not affect adversely time-delay determination. This particular property of the compacted cross-correlation function $R_C(\tau)$ solves the problem of dealing with unknown phase angle $\theta$.

The two above properties (a pronounced sharp peak and independence of phase) of the compacted cross-correlation function $R_C(\tau)$, constructed in accordance with the invention, make the disclosed technique superior to the prior art techniques.

If all the weights $a_k$, k = 0, 1, ... , K, are the same and equal to 1/(K+1), then the periodic comb function $D_K(\tau)$ can be expressed in a closed form as follows

$$D_K(\tau) = \frac{1}{K+1}\left|\frac{\sin[(K+1)\pi f_1 \tau]}{\sin(\pi f_1 \tau)}\right|$$

The above formula can be used to determine the number K of intermediate frequencies that are required to achieve a specified compaction of the cross-correlation envelope $R_E(\tau)$.

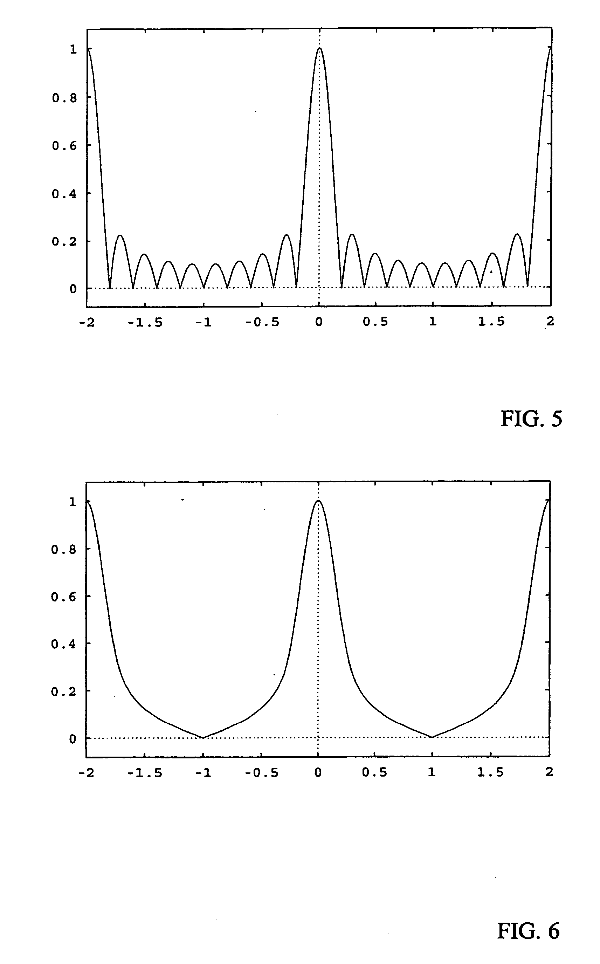

Fig. 5 depicts the shape the periodic comb function $D_K(\tau)$ obtained for nine different intermediate frequencies $kf_1$, k = 1, 2, ... , 9, when the period of the fundamental frequency $f_1$ set to 2, and when all weights $a_k$ are equal. The shape exhibits a plurality of characteristic sidelobes. It should be pointed out that the shape of the comb function $D_K(\tau)$ remains unchanged irrespective of the value of the unknown phase angle $\theta$.

For comparison, Fig. 6 shows the shape the periodic comb function $D_K(\tau)$ when the weights $a_k$ have been constructed in accordance with yet another aspect of the invention described in more detail below. As seen, the comb $D_K(\tau)$ comprises now unimodal 'teeth' with no visible sidelobes.

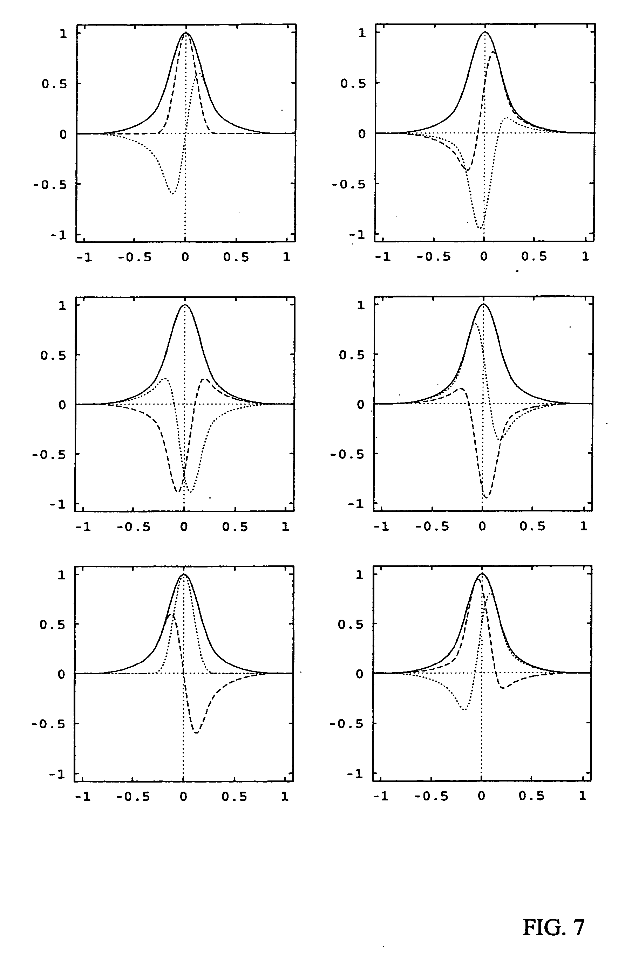

In order to illustrate the fact that the magnitude of the compacted cross-correlation function $R_C(\tau)$, constructed in accordance with the invention, does not depend on the unknown phase angle $\theta$, Fig. 7 depicts the two components, $R_R(\tau)$ and $R_I(\tau)$, and also the magnitude $|R_C(\tau)|$ of the function $R_C(\tau)$ for six arbitrarily selected values of the phase angle $\theta$. As seen, although the shapes of the components $R_R(\tau)$ and $R_I(\tau)$ vary significantly, the shape of the magnitude remains unaffected by the phase angle $\theta$. The compacted cross-correlation functions, shown in Fig. 7, have been obtained by processing ten pairs of cross-correlation functions with the shapes depicted in Fig. 4. The weights $a_k$ used for averaging are the same as used for producing the comb $D_K(\tau)$ shown in Fig 6.

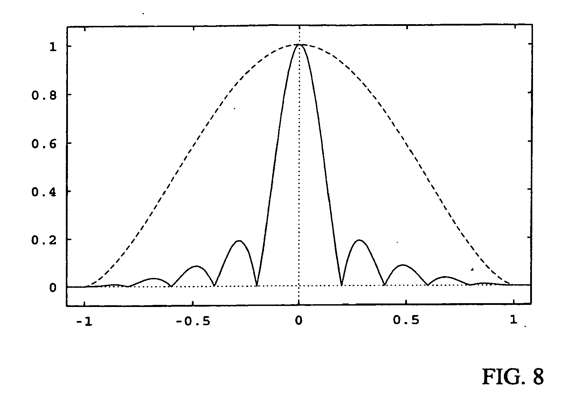

Fig. 8 depicts the magnitude $|R_C(\tau)]$ of the compacted cross-correlation function $R_C(\tau)$ obtained for equal weights; for comparison, the cross-correlation envelope $R_E(\tau)$ is also shown. As seen, the magnitude $|R_C(\tau)|$ of the compacted cross-correlation function exhibits characteristic sidelobes originated from the sidelobe of the comb function $D_K(\tau)$ depicted in Fig. 5.

In some practical applications, the sidelobes appearing in the magnitude $|Rc(\tau)|$ of the compacted cross-correlation function may be tolerated, so long as they do not introduce ambiguity in locating the cross-correlation peak. However, when a delayed signal $s(t-\Delta)$ of interest is corrupted by noise and other interference, it is preferred to suppress sidelobes, at the unavoidably cost of broadening the cross-correlation peak.

Therefore, it would be useful to develop a method for constructing weights $a_k$ in such a way that by varying a single 'control' parameter, the weights distribution would be transformed gradually from uniform (all equal weights producing a narrow response) to non-uniform, resulting in a unimodal response with no sidelobes.

In accordance with another aspect of the invention, weight $a_k$ are determined from binomial coefficients (or from elements in a row of Pascal's triangle) in the following manner. For a specified number (K+1) of weights $a_k$, first determine the primary coefficients $A_k$ as follows

$$A_0 = \frac{1}{2}\binom{2K}{K}^p, \qquad A_k = \binom{2K}{K-k}^p, \quad k = 1, ... , K$$

where p is a control parameter assuming values selected from the (0,1)-interval; when p = 0, all weights (except $A_0$ are equal. (It is noted that for correct operation, the coefficient $A_0$ is always equal to a half of the respective binomial coefficient raised to the power of p). Then, weights $a_k$ are obtained by normalizing the primary coefficients $A_k$ as follows

$$a_k = \frac{A_k}{\sum_{k=0}^{K} A_k}, \quad k = 0, 1, ... , K$$

In signal processing, a set of coefficients used to modify an analyzed waveform is referred to as *window*. Therefore, the set of weights $\{a_k\}$ constructed in accordance - with the invention will be referred to as (one-parameter) *Pascal window*, because the weights could have been obtained from suitable elements of Pascal's triangle.

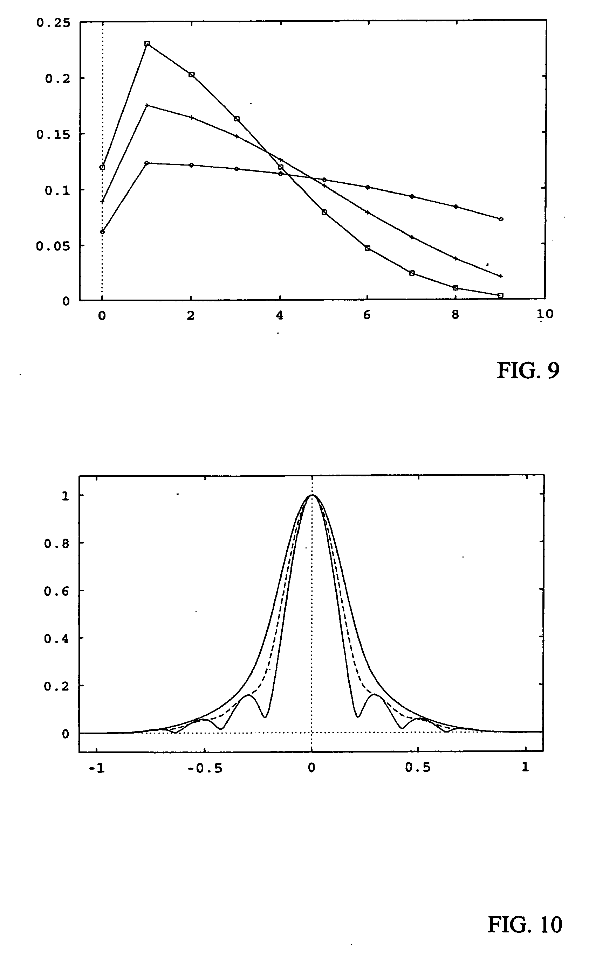

Fig. 9 depicts the shape of Pascal window for k = 0, 1, ... , 9 and three different values of the control parameter p: 0.05, 0.2 and 0.4; Fig. 10 shows the magnitude $|R_C(\tau)|$ of the compacted cross-correlation function $R_C(\tau)$ corresponding to each respective Pascal window. As seen, when p = 0.4, the function $|R_C(\tau)|$ is unimodal with visibly smooth slopes; when p = 0.2, the function is still unimodal, but the slopes exhibit some minor undulation effects; finally, when p = 0.05, the function is no longer unimodal as small sidelobes appear. However, as expected, the width of the magnitude $|R_C(\tau)|$ becomes wider for larger values of the control parameter p. Therefore, the value of parameter p should be selected in a judicious way, taking into account the expected level of interference and other aspects of the intended application.

It should be pointed out that other windows known to those skilled in the art may also be utilized; moreover, a numerical optimization may be performed to design a window satisfying a set of specific criteria. However, Pascal window constructed in accordance with the invention is easy to design, and appears to be well suited to time-delay determination using the disclosed method.

The periodic comb function $D_K(\tau)$ should be 'gated' by the cross-correlation envelope $R_E(\tau)$ in such a manner that only one major peak of the comb function $D_K(\tau)$ is 'captured'. Accordingly, the period of a lowest used frequency, such as the fundamental frequency $f_I$, should be preferably equal to the time'extent, i.e. the support, of the cross-correlation envelope $R_E(\tau)$. In general, the width of the compacted cross-correlation function $|R_C(\tau)|$ will be inversely proportional to the greatest of all used intermediate frequencies, i.e. to $f_K$.

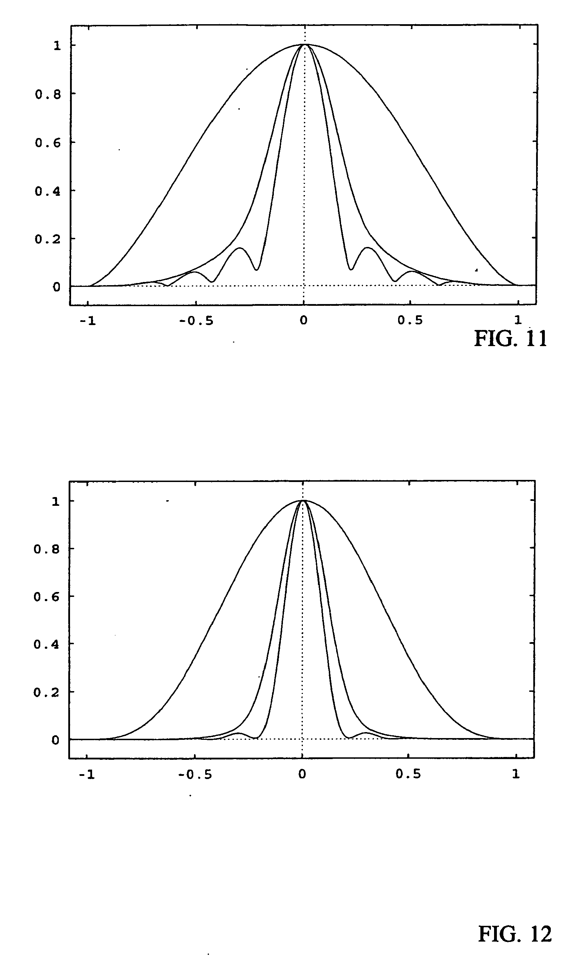

In order to illustrate the improvement in time-delay determination, Fig. 11 depicts a cross-correlation envelope $R_E(\tau)$ and its two compacted versions obtained by utilizing baseband plus nine intermediate frequencies and applying Pascal window with two different values of the control parameter, p = 0.05 and p = 0.4. The width of the underlying function $R_E(\tau)$ has been reduced (at half height), respectively, 4.5 times (p = 0.05) and 3 times (p = 0.4). Obviously, such a reduction will lead to substantially improved peak localization, hence more accurate time-delay determination.

It should be noted that using the squared magnitude

$$|R_C(\tau)|^2 = R^2_R(\tau) + R^2_I(\tau) = \left( \sum_{k=0}^{K} a_k C_k(\tau) \right)^2 + \left( \sum_{k=0}^{K} a_k S_k(\tau) \right)^2$$

instead of the magnitude $|R_C(\tau)|$, of the compacted cross-correlation function $R_C(\tau)$ will simplify the operations and will also lead to a more pronounced peak of the resulting function, thus further improving time-delay determination. For comparison, Fig. 12 shows all the cross-correlation functions of Fig. 11 after squaring.

The disclosed technique offers an improved time-delay measurement without the need to increase the bandwidth of the transmitted signal. Conversely, a signal with a narrower bandwidth can be transmitted to obtain a required accuracy; this property is especially advantageous when constructing systems intended for multiuser or dense-signal environments.

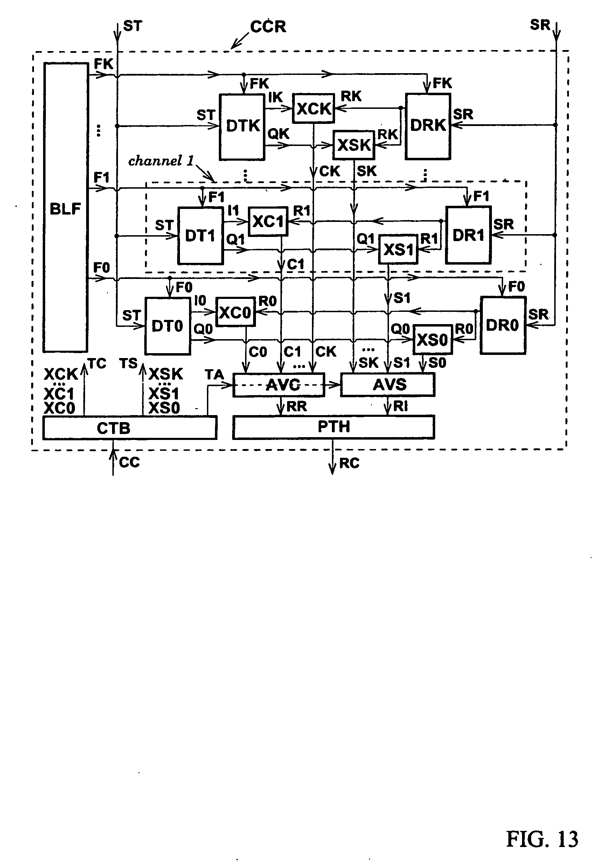

Fig. 13 is a functional block diagram of a correlation compacting system CCR constructed in accordance with the invention. The system comprises:

- a multiple frequency generator BLF '
- a bank of (K+1) quadrature downconverters: DT0, DT1, ... , DTK
- a band of (K+1) downconverters DR0, DR1, ... , DRK
- two banks of correlators, a first bank comprising (K+1) correlators: XC0, XC1, ... , XCK, and a second bank comprising correlator: XS0, XS1, ... , XSK, respectively
- two averaging circuits: AVC and AVS
- a (Pythagoras) function combiner PTH
- a control block CTB

The main part of the system may be viewed as comprising (K+1) identical channels, each performing the same functions and operations, but at a different intermediate frequency $f_k$. Therefore, as an example, the operation of channel 1 will be described in more detail; this channel consists of circuits DT1, XC1, XS1 and DR1.

A reference signal ST, such as a transmitted signal s(t), is applied to one input of the quadrature downconverter DT1 whose other input is driven by a sinusoidal signal F1, supplied by the multiple frequency generator BLF. The frequency of that sinusoidal signal F1 is so chosen as to obtain a required predetermined intermediate frequency $f_1$. The downconverter DT1 produces, at frequency $f_1$, two quadrature versions, I1 and Q1, of input signal ST.

A delayed signal SR, e.g. a received signal s(t - $\Delta$), is applied to one input of the downconverter DR1 whose other input is driven by a sinusoidal signal F1, supplied by the multiple frequency generator BLF. The frequency of that sinusoidal signal F1 is so chosen as to obtain a required predetermined intermediate frequency $f_1$. The downconverter DR1 produces, at frequency $f_I$, a version R1 of input signal SR

The signals, 11 and Q1, produced by the quadrature downconverter DT1 and the signal R1 produced by the downconverter DR1 have all the same centre frequency $f_1$. The signals I1 and R1 are processed in the correlator XC1 to obtain a cross-correlation function C1. Similarly, the signals Q1 and R1 are processed in the correlator XS1 to obtain a cross-correlation function S1.

Because all the (K+1) channels are operating in parallel, they will jointly produce (K+1) in-phase cross-correlation functions: C0, C1, ... , CK and (K+1) quadrature cross-correlation functions: S0, S1, ... , SK. All obtained in-phase cross-correlation functions are averaged with suitable weights in the averaging circuit AVC; similarly, all obtained quadrature cross-correlation functions are averaged with suitable weights in the averaging circuit AVS.

The function combiner PTH utilizes the averages RR and RI supplied by respective averaging circuits, AVC and AVS, to produce an output signal RC representing a compacted cross-correlation function. The location of the peak of the compacted cross-correlation function is indicative of the unknown delay $\Delta$ between the two input signals ST and SR. The output RC can then be used by a suitable external processor to determine the value of this delay.

The correlation compacting system CCR also comprises a control block CTB that supplies suitable timing and synchronizing signals required for correct operation of the system. Control signal TC is applied to the bank of (K+1) correlators: XC0, XC1, ... , XCK, whereas control signal TS is applied to the bank of (K+1) correlators XS0, XS1, ... , XSK. The two averaging circuits, AVC and AVS, also obtain a control signal TA from the block CTB. The control block CTB may operate autonomously or it may be controlled by an external signal appearing at input CC.

As well known to those skilled in the art, some, or even all, of the above functions and operations may be implemented digitally with general-purpose or custom-built processors. However, in the gigahertz region, the required operations will still be more conveniently implemented, at least partly, with analogue hardware.

As well known to those skilled in the art, cross-correlation processing can also be performed by a suitably constructed matched filter. However, in general, matched filtering is used for signal of finite duration and known shape. Therefore, matched filtering is not appropriate for continuous signals, especially non-deterininistic signals, or signals with a non-deterministic modulation.

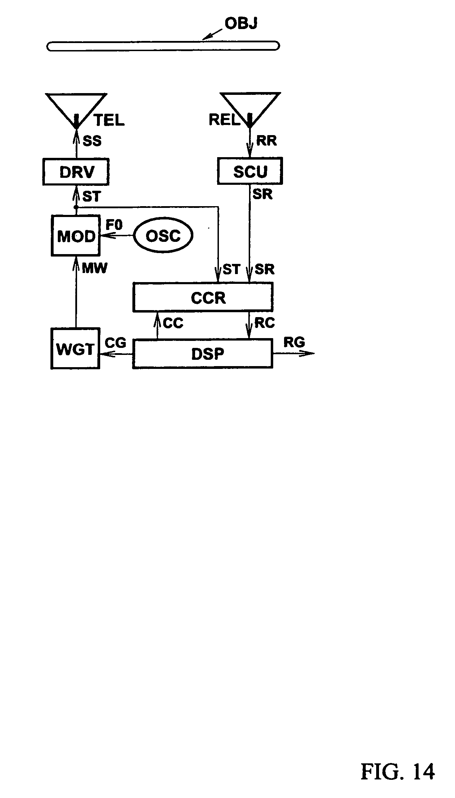

Fig. 14 is a functional block diagram of a modified prior art system shown in Fig. 1. As seen, the downconverter DCR and the correlator COR have been replaced by a correlation compacting system CCR, constructed in accordance with the invention. When compared with the prior art system, the modified system will provide an improved estimate of a time delay to be determined.

The foregoing description of preferred embodiments of the invention has been presented for the purpose of illustration and description. It is not intended to be exhaustive or to limit the invention to the precise form disclosed. In light of the foregoing description, it is evident that many alterations, modifications, and variations will enable those skilled in the art to utilize the invention in various embodiments suited to the particular use contemplated.

**Claims**

1. An apparatus for determining the time shift between two band-pass signals, the apparatus comprising:

   a plurality of channels (F0, F1, ..., FK), each channel associated with a corresponding frequency and comprising:

   first modulating means (DT0, DT1, DTK) for modulating one (ST) of the two band-pass signals by a first modulation signal at the frequency corresponding to the channel and modulating said one of the two band-pass signals by a second modulation signal at the frequency corresponding to the channel to generate a pair of modulated signals (I0, Q0, I1, Q1, IK, QK), wherein the first and second modulation signals have a fixed phase relationship which is out of phase and out of anti-phase,
   second modulating means (DR0, DR1, DRK) for modulating the other (SR) of the two band-pass signals at the frequency corresponding to the channel to generate a modulated signal (R0, R1, RK), and
   means (XC0, XS0, XC1, XS1, XCK, XSK) for correlating the modulated signal output by the second modulating means with the pair of modulated signals output by the first modulating means respectively to generate a pair of comparison functions (C0, S0, C1, S1, CK, SK); means (RPTH) for combining the comparison functions from the plurality of channels to generate a composite comparison function (RC); and means (DSP) for extracting the time shift from the composite comparison function.

2. An apparatus according to claim 1, wherein the frequencies corresponding to the channels are arranged so that the combining means concentrates the energy of the composite comparison function in time in comparison with the energy of the comparison functions produced in the plurality of channels.

3. An apparatus according to claim 1 or 2, wherein each channel is operable to produce a pair of comparison functions representing jointly a complex function having a main peak magnitude at substantially the same timing for all channels, whereby when the combining means respectively combines the pairs of comparison functions the main peak of the resulting complex function has a narrowed peak.

4. An apparatus according to any preceding claim, wherein the first and second modulation signals are in phase quadrature.

5. An apparatus according to any preceding claim, wherein each channel comprises a local oscillator at the frequency corresponding to that channel.

6. An apparatus according to any preceding claim, wherein the combining means comprises:

first adding means for receiving one of the pair of comparison functions from each channel and performing an adding operation on the received comparison functions;
second adding means for receiving the other of the pair of comparison functions from each channel and performing an adding operation on the received comparison functions; and
a function combiner operable to square the outputs of the first and second adding means, and to perform an adding operation on the result to generate the composite comparison function.

7. An apparatus according to claim 6, wherein at least one of the first and second adding means is operable to perform a weighted addition in accordance with a set of weighting coefficients.

8. An apparatus according to claim 7, wherein the set of weighting co-efticients comprises binomial co-eflicients raised to a power p, wherein p is between 0 and 1.

9. An apparatus according to claim 8, wherein the weighting co-efficient associated with baseband is half the corresponding binomial co-cfficient.

10. An apparatus according to claim 8 or 9, further comprising control means operable to vary the value of p.

11. An apparatus according to any preceding claim, wherein said extracting means is operable to determine the timing of the maximum peak of the composite comparison function.

12. An apparatus according to any preceding claim, wherein the two signals are bandpass signals.

**Patentansprüche**

1. Vorrichtung zur Bestimmung der Zeitverschiebung zwischen zwei Handpasssignalen, wobei die Vorrichtung umfasst:

mehrere Kanäle (F0, F1, ..., FK), wobei jeder Kanal einer entsprechenden Frequenz zugeordnet ist und Folgendes umfasst:

ein erstes Modulierungsmittel (DTO, DT1, DTK) zum Modulieren eines (ST) der zwei Bandpasssignale durch ein erstes Modulierungssignal bei der Frequenz, die dem Kanal entspricht, und Modulieren des einen der zwei Bandpasssignale durch ein zweites Modulierungssignal bei der Frequenz, die dem Kanal entspricht, um ein Paar modulierter Signale (I0, Q0, I1, Q1, IK, QK) zu erzeugen, wobei das erste und zweite Modulierungssignal ein festgelegtes Phasenverhältnis haben, das phasenverschoben und antiphasenverschoben ist,
ein zweites Modulierungsmittel (DR0, DR1, DRK) zum Modulieren des anderen (SR) der zwei sandpasssignale durch ein erstes Modulierungssignal bei der Frequenz, die dem Kanal entspricht, um ein moduliertes Signal (R0, R1, RK) zu erzeugen, und
Mittel (XC0, XS0, XC1, XS1, XCK, XSK) zum Korrelieren des modulierten Signals, das von dem zweiten Modulierungsmittel ausgegeben wird, mit dem Paar modulierter Signale, das von dem ersten Modulierungsmittel ausgegeben wird, um jeweils ein Paar von Vergleichsfunktionen (C0, S0, C1, S1, CK, SK) zu erzeugen;
ein Mittel (PTH) zum Kombinieren der Vergleichsfunktionen aus den mehreren Kanälen, um eine zusammengesetzte Vergleichsfunktion (RC) zu erzeugen;

und

ein Mittel (DSP) zum Extrahieren der Zeitverschiebung aus der zusammengesetzten Vergleichsfunktion.

2. Vorrichtung nach Anspruch 1, wobei die Frequenzen, die den Kanälen entsprechen, so angeordnet sind, dass das Kombinationsmittel die Energie der zusammengesetzten vergleichsfunktion zeitlich im Vergleich mit der Energie der Vergleichsfunktionen, die in den mehreren Kanälen erzeugt wird, konzentriert.

3. Vorrichtung nach Anspruch 1 oder 2, wobei jeder Kanal betriebsbereit ist, um ein Paar von Vergleichsfunktionen zu erzeugen, die gemeinsam eine komplexe Funktion mit einer Hauptspitzengröße bei im Wesentlichen derselben Zeitsteuerung für alle Kanäle darstellen, wobei, wenn das Kombinationsmittel jeweils die Paare von Vergleichsfunktionen kombiniert, die Hauptspitze der erhaltenen komplexen Funktion eine verengte Spitze hat.

4. Vorrichtung nach einem der vorangehenden Ansprüche, wobei das erste und zweite Modulierungssignal in Phasenquadratur sind.

5. Vorrichtung nach einem der vorangehenden Ansprüche, wobei jeder Kanal einen lokalen Oszillator bei der Frequenz hat, die diesem Kanal entspricht.

6. Vorrichtung nach einem der vorangehenden Ansprüche, wobei das Kombinationsmittel umfasst:

ein erstes Additionsmittel zum Empfangen einer des Paares von vergleichsfunktionen von jedem Kanal und zum Durchführen eines Additionsvorganges an den empfangenen Vergleichsfunktionen;
ein zweites Additionsmittel zum Empfangen der anderen des Paares von Vergleichsfunktionen von jedem Kanal und zum Durchführen eines Additionsvorganges an den empfangenen Vergleichsfunktionen; und
einen Funktionskombinierer, der betriebsbereit ist, um die Ausgänge des ersten und zweiten Additionsmittels zu quadrieren und einen Additionsvorgang an dem Ergebnis durchzuführen, um die zusammengesetzte Vergleichsfunktion zu erzeugen.

7. Vorrichtung nach Anspruch 6, wobei mindestens eines von dem ersten und zweiten Additionsmittel betriebsbereit ist, um eine gewichtete Addition gemäß einem Satz von Wichtungskoeffizienten durchzuführen.

8. Vorrichtung nach Anspruch 7, wobei der Satz von wichtungskoeffizienten binomische Koeffizienten umfasst, die auf eine Potenz p angehoben sind, wobei p zwischen 0 und 1 liegt.

9. Vorrichtung nach Anspruch 8, wobei die Wichtungskoeffizienten, die einem Basisband zugeordnet sind, die Hälfte des entsprechenden binomischen Koeffizienten sind.

10. Vorrichtung nach Anspruch 8 oder 9, des Weiteren umfassend ein Steuermittel, das zum Variieren des Wertes von p betriebsbereit ist.

11. Vorrichtung nach einem der vorangehenden Ansprüche, wobei das Extraktionsmittel zum Bestimmen der Zeitsteuerung der maximalen Spitze der zusammengesetzten Vergleichsfunktion betriebsbereit ist.

12. Vorrichtung nach einem der vorangehenden Ansprüche, wobei die zwei Signale Sandpasssignale sind.

## Revendications

1. Appareil destiné à déterminer le décalage temporel entre deux signaux passe-bande, l'appareil comprenant :

une pluralité de canaux (F0, F1, ..., FK), chaque canal étant associé à une fréquence correspondante et comprenant :

des premiers moyens de modulation (DTO, DT1, DTK) pour moduler l'un (ST) des deux signaux passe-bande avec un premier signal de modulation à la fréquence correspondant au canal et pour moduler ledit un des deux signaux passe-bande avec un second signal de modulation à la fréquence correspondant au canal pour générer une paire de signaux modulés (I0, Q0, I1, Q1, IK, QK), dans lequel les premier et second signaux de modulation présentent une relation de phase fixe qui n'est ni en phase ni en opposition de phase ;

des seconds moyens de modulation (DR0, DR1, DRK) pour moduler l'autre (SR) des deux signaux passe-bande à la fréquence correspondant au canal pour générer un signal modulé (R0, R1, RK) ; et

des moyens (XC0, XS0, XC1, XS1, XCK, XSK) pour corréler le signal modulé délivré en sortie par les seconds moyens de modulation avec la paire de signaux modulés délivrés en sortie par les premiers moyens de modulation respectivement pour générer une paire de fonctions de comparaison (C0, S0, C1, S1, CK, SK ; des moyens (PTH) pour combiner les fonctions de comparaison à partir de la pluralité de canaux pour générer une fonction de comparaison composite (RC) ; et

des moyens (DSP) pour extraire le décalage temporel à partir de la fonction de comparaison composite.

2. Appareil selon la revendication 1, dans lequel les fréquences correspondant aux canaux sont agencées de telle sorte que le moyen de combinaison concentre l'énergie de la fonction de comparaison composite dans le temps en comparaison de l'énergie des fonctions de comparaison produite dans la pluralité de canaux.

3. Appareil selon la revendication 1 ou 2, dans lequel chaque canal est fonctionnel pour produire une paire de fonctions de comparaison représentant conjointement une fonction complexe présentant une grandeur de crête principale sensiblement à la même synchronisation pour tous les canaux, grâce à quoi, lorsque le moyen de combinaison combine respectivement les paires de fonctions de comparaison, la crête principale de la fonction complexe résultante présente une crête rétrécie.

4. Appareil selon l'une quelconque des revendications précédentes, dans lequel les premier et second signaux de modulation sont en quadrature de phase.

5. Appareil selon l'une quelconque des revendications précédentes, dans lequel chaque canal comprend un oscillateur local à la fréquence correspondant à ce canal.

6. Appareil selon l'une quelconque des revendications précédentes, dans lequel le moyen de combinaison comprend :

des premiers moyens de sommation pour recevoir l'une de la paire de fonctions de comparaison de chaque canal et exécuter une opération de sommation sur les fonctions de comparaison reçues ;

des seconds moyens de sommation pour recevoir l'autre de la paire de fonctions de comparaison de chaque canal et exécuter une opération de sommation sur les fonctions de comparaison reçues ; et

un combinateur de fonctions fonctionnel pour élever au carré les sorties des premiers et seconds moyens de sommation, et pour exécuter une opération de sommation sur le résultat afin de générer la fonction de comparaison composite.

7. Appareil selon la revendication 6, dans lequel au moins un parmi les premiers et seconds moyens de sommation est fonctionnel pour exécuter une sommation pondérée selon un ensemble de coefficients de pondération.

8. Appareil selon la revendication 7, dans lequel l'ensemble des coefficients de pondération comprend des coefficients binomiaux élevés à une puissance p, où p est compris entre 0 et 1.

9. Appareil selon la revendication 8, dans lequel le coefficient de pondération associé à la bande de base est égal à la moitié du coefficient binomial correspondant.

10. Appareil selon la revendication 8 ou 9, comprenant en outre des moyens de commande fonctionnels pour faire varier la valeur de $p$.

11. Appareil selon l'une quelconque des revendications précédentes, dans lequel ledit moyen d'extraction est fonctionnel pour déterminer la synchronisation de la crête maximale de la fonction de comparaison composite.

12. Appareil selon l'une quelconque des revendications précédentes, dans lequel les deux signaux sont des signaux passe-bande.

FIG. 1

a)

power spectrum density

$2B$

$f$

$f_c$

b)

power spectrum density

$B$

conversion to baseband

$f$

$0$

c)

$1 - \gamma \left( f_c^2 + B^2 \right) \tau^2$

$\tau$

d)

$1 - \gamma B^2 \tau^2$

$\tau$

FIG. 2

*reference (transmitted) signal s(t)*    *delayed (received) signal s(t −Δ)*

power spectrum
density

$f$

$f_c$

power spectrum
density

$f$

$f_c$

power spectrum
density

0 ... k ...K

*downconversion
to baseband and
K frequencies*

$f$

power spectrum
density

0 ... k ...K

*downconversion
to baseband and
K frequencies*

$f$

0   $f_k$   $f_K$

$f_k$   $f_K$

... ... ... ...

*spectral 'tiles'*

*spectral 'tiles'*

| 0 | ... | k | ... | K |   *bank of (K+1) complex correlators*

*function combiner*

*compacted function with a sharp peak*

FIG. 3

FIG. 4

FIG. 4 (cont.)

FIG. 5

FIG. 6

FIG. 7

FIG. 8

FIG. 9

FIG. 10

FIG. 11

FIG. 12

FIG. 13

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. SUGASAWA.** Time Difference Measurement of Ultrasonic Pulses Using Cross-Correlation Function between Analytic Signals. *Jpn. J. Appl. Phys.,* 2002, vol. 41, 3299-3307